Europäisches Patentamt

European Patent Office

Office européen des brevets

(11) Veröffentlichungsnummer: **0 511 495 A1**

# (12) EUROPÄISCHE PATENTANMELDUNG

(21) Anmeldenummer: **92105238.7**

(51) Int. Cl.⁵: **B60S 1/08**

(22) Anmeldetag: **26.03.92**

(30) Priorität: **22.04.91 DE 9104929 U**

(43) Veröffentlichungstag der Anmeldung:
**04.11.92 Patentblatt 92/45**

(84) Benannte Vertragsstaaten:
**DE FR GB**

(71) Anmelder: **UHER AKTIENGESELLSCHAFT FÜR ZÄHLER UND ELEKTRONISCHE GERÄTE**
**Mooslackengasse 17**
**A-1190 Wien(AT)**

(72) Erfinder: **Waskiewicz, Ludwik, Dipl.-Ing.**
**Akaziengasse 50/46**
**A-1234 Wien(AT)**

(74) Vertreter: **Fuchs, Franz-Josef, Dr.-Ing. et al**
**Postfach 22 13 17**
**W-8000 München 22(DE)**

(54) **Steuerschaltung zur Steuerung des Wischermotorbetriebes, um die Scheibe eines Fahrzeuges zu reinigen.**

(57) Steuerschaltung (S) zur Steuerung des Wischermotorbetriebes (M), um die Scheibe eines Fahrzeuges zu reinigen, wobei der Wischermotor (M) einen Kontakt (K) aufweist, welcher bei Ruhelage des Wischers (A) betätigt wird. Die Steuerschaltung (S) enthält eine Zeitkontrolleinheit (Z), welche nach dem EINschalten des Wischermotors (M) anhand des Schaltzustandes des Kontaktes (K) während der Dauer einer Prüfphase (d) überprüft, ob der Wischermotor (M) läuft oder am Laufen gehindert ist. Die Steuerschaltung (S) schaltet, falls die Überprüfung des Kontaktes (K) ergibt daß der Wischermotor (M) am Ende der Prüfphase (d) noch immer am Laufen gehindert ist, den Wischermotor (M) durch Unterbrechen von Stromzufuhr (E) für eine - im Vergleich zur Prüfphasendauer (d) sehr lange, z.B. 8fach oder 100fach längere - Pausendauer (D) AUS, bevor sie (S) den Wischermotor (M) erneut EINschaltet.

FIG 2

Die Erfindung geht von dem im Oberbegriff des Patentanspruches 1 definierten Gegenstand aus, der dem einschlägigen Fachmann vertraut ist. Der betreffende Kontakt dient im allgemeinen nur dazu, den Wischermotor dann abschalten zu können, sobald der betreffende Wischer bzw. das betreffende Wischerblatt in seiner Ruhestellung ist.

Die Aufgabe,
- mit besonders wenig Aufwand das ganze Wischersystem einschließlich der Stromversorgung zu schonen, wenn sich der Wischermotor trotz EINschalten nicht bewegt,
- z.B. falls die Wischerblätter an der Scheibe fest haften, z.B. weil sie angefroren sind, und / oder weil der Wischermotor verdreckt ist,
- nämlich z.B.
  •• die Steuerschaltung - insbes. deren oft leicht überlastbaren Motorstromschalter, der falls er mechanisch ist auch leicht verschmoren oder kleben könnte - und / oder
  •• den Wischermotor und / oder
  •• das meistens recht empfindliche Wischerblatt und / oder
  •• die Fahrzeugbatterie bzw. das elektrische Bordnetz

nicht Zu überlasten, falls die Wischerblätter an der Scheibe angefroren sind oder weil der Wischermotor verdreckt ist,
wird erfindungsgemäß durch den im Patentanspruch 1 definierten Gegenstand gelöst.

Die Erfindung geht auch von der Erkenntnis aus, daß vermieden werden sollte, daß die Steuerschaltung den sich nicht bewegenden Wischermotor ständig - ohne selbsttätiges völliges Abbrechen - sehr rasch hintereinander abwechselnd EIN- und AuSschaltet, wodurch sogar auch der den Wischermotorbetrieb rasch abwechselnd EIN- und AuSschaltende Motorstromschalter selber überlastet werden, also - je nach Kontakttyp - z.B. kleben bzw. verschmoren kann.

Die in den Unteransprüchen definierten Gegenstände gestatten, zusätzliche Vorteile zu erreichen. U.a. gestatten nämlich die zusätzlichen Maßnahmen gemäß dem Patentanspruch

2, einen besonders schonenden Betrieb, indem die EINschaltphasen nur sehr kurz andauern,

3, einen besonders schonenden Betrieb, indem die AUSschaltphasen zwischen den EINschaltphasen relativ lange andauern,

4, einen besonders schonenden Betrieb, indem die Anzahl der EINschaltversuche nach oben begrenzt wird, also indem die Anzahl der AUSschaltphasen zwischen den EINschaltphasen nach oben begrenzt wird, sowie

5, eine besonders kompakte, stromsparende und trotzdem leicht an den jeweiligen Fahrzeugtyp anpaßbare Konstruktion zu erreichen.

Die Erfindung und Weiterbildungen derselben werden anhand der in den beiden Figuren gezeigten Schemen von Ausführungsbeispielen der Erfindung weiter erläutert, welche der Übersichtlichkeit wegen jeweils möglichst einfach dargestellt wurden. Dabei zeigt die Figur

1 ein Schaltschema eines Ausführungsbeispieles der Erfindung, und

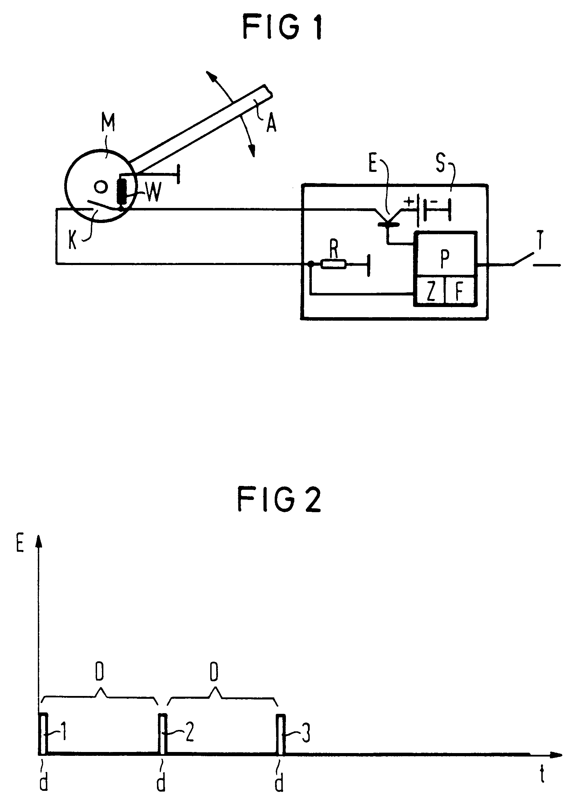

2 ein Zeitdiagramm für die Betätigung des in der Figur 1 gezeigten Motorstromschalters.

Die in der Figur 1 gezeigte Steuerschaltung S enthält den Motorstromschalter E, welcher die Wicklung W des Wischermotors M aus dem Bordnetz, hier aus der Fahrzeugbatterie, mit Strom versorgen kann.

Der Wischermotor M weist den Kontakt K auf, welcher in der Ruhelage des Wischers A vom Wischermotor M betätigt wird. Dieser Kontakt K dient dazu, die Ruhelage des Wischers A erkennen zu können. Er dient insbes. dazu, den Wischermotor M automatisch in der Ruhelage des Wischers A abschalten zu können, also dann, wenn auch das von diesem Wischer A angetriebene Wischerblatt seine Ruhelage erreicht hat.

Die Steuerschaltung S überprüft mittels des Prüfwiderstandes R bei EINgeschaltetem Motorstromschalter E den Zustand des Kontaktes K am Wischermotor M.

Die Steuerschaltung S enthält eine Zeitkontrolleinheit Z, welche nach dem EINschalten des Wischermotors M anhand des Schaltzustandes des Kontaktes K während der Dauer der ersten Prüfphase d überprüft, ob der Wischermotor M läuft oder daran gehindert ist, vgl. die erste EINschaltung 1 des Motorstromes mit dem Motorstromschalter E in der Figur 2.

Wenn der Kontakt K schon kurzzeitig nach dem EINschalten des Wischermotors M, nämlich noch während der ersten Prüfphase d, - direkt oder indirekt - vom Wischermotor M betätigt wird, ist offensichtlich das betreffende Wischerblatt bzw. der Wischermotor M bewegbar, also das Wischerblatt nicht angefroren oder aus sonstigen Gründen gehindert sich zu bewegen. Dann wird der Wischermotor M in der dafür bekannten Weise weiter über den Motorstromschalter E mit Strom versorgt.

Falls diese Überprüfung des Kontaktes K ergibt, daß der Wischermotor M am Ende der ersten Prüfphase d noch immer am Laufen gehindert ist, schaltet die Steuerschaltung S mittels des Motorstromschalters E den Strom durch die Wicklung W des Wischermotors M ab, und zwar für eine - im Vergleich zur Prüfphasendauer (d) sehr lange, z.B. 8fach oder 100fach längere - Pausendauer D.

Die Dauer d der anfänglichen EINschaltung 1 des Motorstromes mittels des Schalters E, sowie die Dauer d der ersten Prüfphase 1 sind dann also in erster Näherung identisch. Wenn sich der Wischermotor M während der ersten Prüfphase d nicht ausreichend bewegte, unterbricht jedoch bei der Erfindung die Zeitkontrolleinheit Z kurz nach dem EINschalten des Wischermotors M, z.B. nach d = 300 msec, die Stromzufuhr für längere Zeit, z.B. für D = ca. 6 sec.

Damit kann der Wischermotor M nicht zu heiß werden, und / oder die Steuerschaltung - besonders z.B. deren Schalter E für die Motorstromversorgung - nicht durch Überlastung Schaden erleiden.

Erst nach der langen Pausendauer D schaltet die Steuerschaltung mittels des Motorstromschalters E den Wischermotor M erneut EIN, vgl. die zweite EINschaltung 2 in der Figur 2. Falls sich jetzt der Wischermotor M ausreichend bewegt, was für die Zeitkontrolleinheit Z am Prüfwiderstand R erkennbar ist, dann bleibt der Wischermotor M von nun an EINgeschaltet. Falls sich aber der Wischermotor M immer noch nicht ausreichend bewegt, was für die Zeitkontrolleinheit Z ebenfalls am Prüfwiderstand R erkennbar ist, dann kann der Strom durch die Wicklung W erneut erfindungsgemäß AUSgeschaltet werden, und zwar eben erneut nach der kurzen zweiten Prüfphase d, an welche sich erneut eine Pause anschließt, wonach der Motorstrom ein drittes Mal mittels des Schalters E eingeschaltet wird. Fängt nun der Wischermotor M an sich ausreichend zu bewegen, dann bleibt sein Motorstrom eingeschaltet, andernfalls bleibt bei dem in der Figur 2 gezeigten Beispiel der Wischermotor M nach der kurzen dritten Prüfphase d nun endgültig AUSgeschaltet. Bei dem in der Figur 2 gezeigten Beispiel macht die Steuerschaltung insgesamt drei Versuche 1-2-3, den Wischermotor M zu starten, bevor die Steuerschaltung völlig jeden weiteren solchen Versuch unterläßt. Erst in Abständen von eben jenen relativ langen Pausen D - beispielhaft nach jeweils D = ca. 6 sec - wird der Wischermotor D erneut kurz zu starten versucht und der Schalter E jeweils sogleich wieder AUSgeschaltet, falls das Wischerblatt bzw. der Wischermotor M noch immer gehindert ist sich zu bewegen.

Die gezeigte Steuerschaltung S gestattet wegen der - im Vergleich zur Pausendauer D - jeweils relativ kurzen EINschaltdauer d, mit besonders wenig Aufwand das ganze Wischersystem einschließlich der Stromversorgung zu schonen, wenn sich der Wischermotor M trotz des EINschaltens nicht bewegte; - und zwar auch dann, wenn die Dauer D der Pause unendlich lang wäre, wenn also die Steuerschaltung schon nach der ersten Prüfphase 1 bzw. d endgültig jeden weiteren Versuch unterläßt, den Wischermotor M doch noch starten zu können.

Falls also die Wischerblätter an der Scheibe fest haften, z.B. weil sie angefroren sind, und / oder falls der Wischermotor so verdreckt oder defekt ist, daß er sich nicht mehr bewegen kann, wird der Wischbetrieb mit besonders langen Pausen selbsttätig unterbrochen. Das gestattet, nicht nur die Steuerschaltung S, insbes. deren oft leicht überlastbaren Motorstromschalter E zu schonen; - falls dieser Schalter E mechanisch statt elektronisch ist, könnte er bei Stillstand des Wischermotors M durch Überhitzung auch verschmoren oder kleben. Die Erfindung vermeidet auch die Überhitzung der Wicklung W des stillstehenden Wischermotors M. Außerdem schont die Erfindung das meistens recht empfindliche Wischerblatt, wenn dieses an der Scheibe fest haftet, also z.B. angefroren ist. Außerdem schont die Erfindung auch die Fahrzeugbatterie bzw. das elektrische Bordnetz, besonders auch dann, wenn die Batterie schlecht geladen und / oder sehr kalt ist.

Die Erfindung löst also Schwierigkeiten, wenn das Wischerblatt an der betreffenden Scheibe festgefroren ist oder wenn es sich aus sonstigen Gründen nicht mehr bewegen kann.

Man kann einen besonders schonenden Betrieb dadurch erreichen, daß die Prüfphasen d, damit die entsprechenden EINschaltphasen d, besonders kurz gemacht werden, auch dadurch, daß die AUSschaltphasen zwischen den EINschaltphasen relativ lange gemacht werden. Die Prüfphase d kann man ins-bes. kürzer als 1 Sekunde, z.B. 300 msec machen. Die Pausendauer D kann man z.B. zwischen 1 sec und 10 sec machen, also z.B. 6 sec.

Einen besonders schonenden Betrieb kann man erreichen, indem die Anzahl der EINschaltversuche, vgl. d bzw. 1-2-3, nach oben begrenzt wird, also indem die Anzahl der AUSschaltphasen zwischen den EINschaltphasen d nach oben begrenzt wird. Dazu kann die Steuerschaltung S eine Zähleinheit F enthalten, welche die Anzahl der bei gehindertem Wischermotor M getätigten Unterbrechungen D bzw. die Anzahl der bei gehindertem Wischermotor M getätigten EINschaltungen d bzw. 1-2-3 zählt, wobei die Steuerschaltung S diese EINschaltungen selbsttätig völlig beendet, falls die gezählte Anzahl einen Grenzwert, z.B. drei Unterbrechungen bzw. drei EINschaltungen gemäß der Figur 2, überschreitet.

Das völlige Unterbrechen kann z.B. dadurch realisiert werden, daß die Steuerschaltung einen Speicher enthält, der im Prinzip auch schon durch ein Flipflop realisiert sein kann.

In diesem Speicher wird ein Abbrechsignal gespeichert, welches das selbsttätige völlige Abbrechen der EINschaltversuche steuert.

Die Löschung dieses gespeicherten Abbrechsignales kann man je nach Bedarf im Prinzip auf verschiedene Weisen erreichen, die man auch miteinander kombiniert anwenden kann : Z.B. kann man das Löschen durch ein Gebersignal auslösen, welches der Fahrzeugbenutzer erzeugt, sobald er ein Bedienorgan, z.B. einen Lenkstockhebel, des Wischersystemes bewegt, oder sobald er dieses Bedienorgan in eine bestimmte Stellung bewegt. Man kann das Löschen auch - ausschließlich oder zusätzlich - davon abhängig machen, ob die Zündung und / oder ein Motor zum Verspritzen von Waschflüssigkeit EINgeschaltet ist oder EINgeschaltet wird. Man kann das Löschen z.B. auch dadurch auslösen, daß der Fahrzeugbenutzer das Wischersystem mit dessen Bedienorgan AUSschaltet, und / oder dadurch, daß dieser Benutzer das Wischersystem auf ununterbrochenes langsames oder schnelles Wischen EINschaltet. Man kann aber das Löschen bei Bedarf z.B. auch durch eine in der Steuerschaltung S angebrachte Zeitschaltung erreichen, welche nach einer vorgebbaren, sehr langen Zeitdauer, z.B. nach 2 Minuten, selbsttätig das Abbrechsignal wieder löscht.

Eine besonders kompakte, stromsparende und trotzdem leicht an den jeweiligen Fahrzeugtyp anpaßbare Konstruktion kann man dadurch erreichen, daß die Steuerschaltung S zusammen mit ihrer Zeitkontrolleinheit Z - evtl. auch zusammen mit ihrer Zähleinheit F - zumindest weitgehend durch einen von einem PROM gesteuerten Mikroprozessor P gebildet wird, wie in der Figur 1 angedeutet ist. Es ist auch möglich, zum Schalten besonders hoher Motorströme zusätzlich ein Relais in der Steuerschaltung S anzubringen, dessen Schaltzustand von dem Mikroprozessor P gesteuert wird.

Die Zeitkontrolleinheit kann aber z.B. auch durch entsprechend eingefügte RC-Glieder oder diskrete digitale Zähler gebildet werden.

Liste der Bezugszeichen

| 1 | (erste) EINschaltung |
| 2 | (zweite) Einschaltung |
| 3 | (dritte) EINschaltung |
| A | Wischer |
| d | (Dauer der) Prüfphase |
| D | Pausendauer |
| E | Motorstromschalter |
| F | Zähleinheit |
| K | Kontakt |
| M | Wischermotor |
| P | Mikroprozessor |
| R | Prüfwiderstand |
| S | Steuerschaltung |
| t | Zeit |
| W | (Motor-)Wicklung |
| Z | Zeitkontrolleinheit |

**Patentansprüche**

1.  Steuerschaltung (S) zur Steuerung des Wischermotorbetriebes (M), um die Scheibe eines Fahrzeuges zu reinigen,
    - wobei der Wischermotor (M) einen Kontakt (K) aufweist, welcher bei Ruhelage des Wischers (A) betätigt wird,
    **dadurch gekennzeichnet,**
    - daß sie (S) eine Zeitkontrolleinheit (Z) enthält, welche nach dem EINschalten des Wischermotors (M) anhand des Schaltzustandes des Kontaktes (K) während der Dauer einer Prüfphase (d) überprüft, ob der Wischermotor (M) läuft oder am Laufen gehindert ist, und
    - daß sie (S), falls die Überprüfung des Kontaktes (K) ergibt daß der Wischermotor (M) am Ende der Prüfphase (d) noch immer am Laufen gehindert ist, den Wischermotor (M) durch Unterbrechen von Stromzufuhr (E) für eine - im Vergleich zur Prüfphasendauer (d) sehr lange, z.B. 8fach oder 100fach längere - Pausendauer (D) AUSschaltet, bevor sie (S) den Wischermotor (M) erneut EINschaltet.

2.  Steuerschaltung (S) Patentanspruch 1,
    **dadurch gekennzeichnet,**
    - daß die Prüfphase (d) kürzer als 1 Sekunde, z.B. 300 msec, andauert.

3.  Steuerschaltung (S) nach Patentanspruch 1 oder 2,
    **dadurch gekennzeichnet,**
    - daß der Betrag der Pausendauer (D) zwischen 1 sec und 20 sec, z.B. 6 sec, ist.

4.  Steuerschaltung (S) nach einem der vorhergehenden Patentansprüche,
    **dadurch gekennzeichnet,**
    - daß sie (S) eine Zähleinheit (F) enthält, welche die Anzahl der bei gehindertem Wischermotor (M) getätigten Unterbrechungen bzw. die Anzahl der bei gehindertem Wischermotor (M) getätigten EINschaltungen (1-2-3 bzw. E bzw. d) zählt, und
    - daß sie (S) die EINschaltungen (1-2-3 bzw. E bzw. d) selbsttätig völlig beendet, falls die gezählte Anzahl einen Grenzwert, z.B. drei Unterbrechungen bzw. drei EINschaltungen, überschreitet.

5.  Steuerschaltung (S) nach einem der vorhergehenden Patentansprüche,
    **dadurch gekennzeichnet,**
    - daß sie (S) zusammen mit ihrer Zeitkontrolleinheit (Z)
    - evtl. auch zusammen mit ihrer Zähleinheit (F) - zumindest weitgehend durch einen von einem PROM gesteuerten Mi-

kroprozessor (P) gebildet wird.

## FIG 1

## FIG 2

| | EINSCHLÄGIGE DOKUMENTE | | EP 92105238.7 | |
|---|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl⁵)** | |
| X | DE - A - 2 852 676 (SWF) * Seite 9, 2. Absatz; Patentansprüche 2,10 * -- | 1 | B 60 S 1/08 | |
| X | DE - A - 2 918 658 (SWF) * Seite 5, 2. Absatz; Patentanspruch 1 * -- | 1 | | |
| A | DE - A - 2 600 468 (BISSCHOPINCK) * Patentansprüche 1,2 * -- | 1 | | |
| A | DE - A - 3 825 301 (SWF) * Zusammenfassung * ---- | | | |
| | | | **RECHERCHIERTE SACHGEBIETE (Int. Cl⁵)** | |
| | | | B 60 S | |
| | Der vorliegende Recherchenbericht wurde für alle Patentansprüche erstellt. | | | |

| Recherchenort | Abschlußdatum der Recherche | Prüfer |
|---|---|---|
| WIEN | 11-08-1992 | HENGL |